## Europäisches Patentamt

## European Patent Office

## Office européen des brevets

(11) Veröffentlichungsnummer: **0 192 077**
**B1**

# EUROPÄISCHE PATENTSCHRIFT

(45) Veröffentlichungstag der Patentschrift:
**30.03.88**

(21) Anmeldenummer: **86100889.4**

(22) Anmeldetag: **23.01.86**

(51) Int. Cl.⁴: **C 09 D 15/00, C 09 D 3/74**

(54) **Bindemittel für wässrige Grundierungen für Holzanstriche.**

(30) Priorität: **30.01.85 DE 3502944**

(43) Veröffentlichungstag der Anmeldung:
**27.08.86 Patentblatt 86/35**

(45) Bekanntmachung des Hinweises auf die Patenterteilung:
**30.03.88 Patentblatt 88/13**

(84) Benannte Vertragsstaaten:
**AT BE CH DE FR GB IT LI NL SE**

(56) Entgegenhaltungen:
**US - A - 3 847 857**

(73) Patentinhaber: **BASF Aktiengesellschaft,
Carl-Bosch-Strasse 38, D-6700 Ludwigshafen (DE)**

(72) Erfinder: **Kossmann, Heribert, Windestrasse 30,
D-6700 Ludwigshafen (DE)**
Erfinder: **Matthaei, Lothar, Am Westring,
D-6714 Weisenheim (DE)**
Erfinder: **Ley, Gregor, Dr., In den Trankstuecken,
D-6719 Wattenheim (DE)**
Erfinder: **Wistuba, Eckehardt, Dr., Im Obergarten 7,
D-6702 Bad Duerkheim (DE)**
Erfinder: **Wulgaris, Savas, Dr., Kranichstrasse 7,
D-6700 Ludwigshafen (DE)**

## Beschreibung

Die vorliegende Erfindung betrifft die Grundierung für Holzanstriche, die das Ausbluten von Holzinhaltsstoffen verhindert.

Es ist bekannt, dass Holzinhaltsstoffe, wie Tanin und Lignin, die in Hölzern wie Redwood, Cedar, Mahagony und Merbau enthalten sind, insbesondere unter der Einwirkung von Feuchtigkeit zur Fleckenbildung von Deckbeschichtungen, z.B. Lackierungen, führen. Um dies zu verhindern, werden vor dem Aufbringen von Lackierungen Isolierschichten, d.h. Grundierungen auf die Holzoberfläche aufgebracht. Als Bindemittel für derartige Grundierungen wurden bis jetzt mit Erfolg Polyurethan- und Epoxiharz-Lacke eingesetzt. Diese Beschichtungssysteme sind jedoch toxisch und werden häufig unter Zusatz von Lösungsmitteln verarbeitet, die die Umwelt belasten. Auch trocknen derartige Systeme zum Teil recht langsam, so dass die Deckbeschichtung erst nach längerer Trockenzeit aufgebracht werden kann.

Aus der US-PS 3 847 857 sind zudem wässerige Beschichtungen bekannt, die das Fleckig-werden von Holzbeschichtungen verhindern sollen. Basis für diese Beschichtungen sind wasserverdünnbare, amino- oder quartäre Ammoniumgruppen enthaltende Vinylpolymerisate, denen in manchen Fällen mehrwertige Metallionen, wie Chrom-, Wolfram-, Bor- und Molybdän-Ionen, sowie toxische Verbindungen, wie Chromate zugemischt werden können. Die Produkte dieser Art können jedoch, da sie bei der Bewitterung vergilben, nur in Grundierungen eingesetzt werden, doch lässt auch hier ihre Wirkung hinsichtlich der Verhinderung der Fleckenbildung zu wünschen übrig.

Schliesslich hat man auch schon versucht, wässerigen Dispersionen zur Verhinderung der Fleckenbildung bei Holzbeschichtungen basisches Bleisilikat, basisches Bleisilikochromat und/oder Bariummetaborat zuzusetzen, doch sind diese Pigmente sehr toxisch und können gegebenenfalls nur für deckende Beschichtungen eingesetzt werden.

Der vorliegenden Erfindung liegt nun die Aufgabe zugrunde, Bindemittel für Grundierungen für Holzanstriche zur Verfügung zu stellen, die transparente lichtfeste Filme liefern, die das Ausbluten von Holzinhaltsstoffen und die dadurch bedingte Fleckenbildung verhindern.

Es wurde nun gefunden, dass wässerige Grundierungen für Holzanstriche, die als Bindemittel (A) 50 bis 95% ihres Gewichtes einer wässerigen, gegen mehrwertige Ionen stabilen Dispersion eines Vinylpolymerisats einer Teilchengrösse von 0,03 bis 0,5 µm und einer MFT von 0 bis 50°C und (B) 5 bis 50% ihres Gewichtes eines wasserlöslichen polymeren Zinkaminkomplexes aus einem Copolymerisat des K-Werts 8 bis 40 aus

(a) 20 bis 60% seines Gewichtes einer 3 bis 5 C-Atome enthaltenden $\alpha,\beta$-monoethylenisch ungesättigten Mono- und/oder Dicarbonsäure und

(b) 40 bis 80% seines Gewichtes Styrol und/oder mindestens einem (Meth)acrylsäureester eines 1 bis 8 C-Atome aufweisenden Alkanols, das mit 2 bis 6 Mol, bezogen auf die Carboxylgruppen des Copolymerisats, Ammoniak und 0,8 bis 1,2 Äquivalente pro Carboxylgruppe des Copolymerisats einer Zinkverbindung umgesetzt ist, enthalten, die Fleckenbildung durch Ausbluten von Holzinhaltsstoffen verhindern.

Die mit derartigen, nicht-toxischen Bindemitteln hergestellten Filme sind klar transparent und farblos und können als solche oder in pigmentierter Form eingesetzt werden.

Das Vinylpolymerisat der meist 40 bis 60 gew.%igen wässerigen Dispersionen (A) enthält meist monoolefinisch ungesättigte Carbonsäureester mit 4 bis 12 C-Atomen, wie Vinylester, Acrylester und/oder Methacrylester sowie vinylaromatische Verbindungen, wie vor allem Styrol und/oder Vinylhalogenide und/oder Vinylidenhalogenide, wie besonders Vinylchlorid und/oder Vinylidenchlorid einpolymerisiert. Als monoolefinisch ungesättigte Carbonsäureester kommen vor allem Methylacrylat und -methacrylat, Ethylacrylat und -methacrylat, n-Butylacrylat und -methacrylat, Isobutylacrylat, 2-Ethylhexylacrylat und -methacrylat sowie Vinylacetat, Vinylpropionat und/oder Vinylhexanoat in Betracht. Von besonderem Interesse als Vinylpolymerisate sind Copolymerisate von Acrylestern mit Styrol oder Vinylester sowie ferner von Acrylestern mit Methylmethacrylat oder Vinylchlorid und/oder Vinylidenchlorid. Derartige Copolymerisate können zusätzlich in untergeordneten Mengen, d.h. bis zu etwa 20% ihres Gewichts Acrylnitril sowie bis zu etwa 5% ihres Gewichts meist 3 bis 5 C-Atome enthaltende monoolefinisch ungesättigte Mono- und/oder Dicarbonsäuren oder deren Amide wie besonders Acrylsäure, Methacrylsäure, Acrylamid, Methacrylamid sowie Fumarsäure und/oder Itakonsäure einpolymerisiert enthalten. In manchen Fällen kommen als Comonomere auch in Mengen bis zu etwa 5 Gew.%, bezogen auf die Copolymerisate, Hydroxylgruppen aufweisende Acrylester wie 2-Hydroxyethylacrylat und -methacrylat und 3 Hydroxypropylacrylat und -methacrylat in Betracht. Schliesslich kommt als Comonomeres für Vinylpolymerisate auf Basis von Vinylchlorid und/oder Vinylidenchlorid auch in Mengen von etwa 0,5 bis 2 Gew.%, bezogen auf das Vinylpolymerisat Vinylsulfonsäure und/oder deren wasserlösliche Salze, wie Natriumvinylsulfonat in Frage. Die Vinylpolymerisate sollen eine Teilchengrösse von 0,3 bis 0,5, insbesondere von 0,075 bis 0,25 µm und eine MFT von 0 bis 50, insbesondere von 5 bis 25°C haben. Die wässerigen Dispersionen der Vinylpolymerisate sollen gegen mehrwertige Ionen stabil sein und können in an sich üblicher Weise hergestellt sein.

Vinylpolymerisat-Dispersionen dieser Art sind auch im Handel erhältlich und enthalten meist zur Erzielung einer Stabilität gegen mehrwertige Metallionen 0,75 bis 5, vorzugsweise 1 bis 2,5 Gew.%, bezogen auf das Polymerisat, an ionischen und/oder nicht-ionischen Emulgatoren aus der Gruppe der mit Ethylenoxid umgesetzten Fettalkohole und -Alkylphenole. Weiterhin werden die sulfierten Produkte der mit Ethylenoxid umgesetzten p-Alkylphenole eingesetzt. Der Ethoxylierungsgrad beträgt meist 8 bis 35, der Alkylrest der Fettalkohole und der Alkylphenole enthält im allgemeinen 8 bis 25 C-Atome.

Die Menge der Komponente (A) als etwa 50%ige wässerige Polymerdispersion liegt vorzugsweise im Bereich von 75 bis 90 Gew.%, bezogen auf die gesamte Grundierung.

Der wasserlösliche polymere Zinkaminkomplex (B) wird im allgemeinen als 20 bis 60 gew.%ige, insbesondere als 30 bis 45 gew.%ige wässerige Lösung eingesetzt, wobei der K-Wert des Copolymer-Anteils, bestimmt in 1%iger Lösung in Tetrahydrofuran nach DIN 53 726 bei 20° C im allgemeinen im Bereich von 8 bis 40, bevorzugt im Bereich von 10 bis 25 liegt. Der Copolymer-Anteil des polymeren Zinkaminkomplexes ist aus (a) 20 bis 60% seines Gewichtes, insbesondere aus 25 bis 50% einer 3 bis 5 C-Atome enthaltenden α,β-ethylenisch ungesättigten Mono- und/oder Dicarbonsäure, wie insbesondere Acrylsäure, Methacrylsäure, Itakonsäure und/oder Fumarsäure bzw. Maleinsäure und (b) 40 bis 80% seines Gewichts, insbesondere 75 bis 50% an Styrol und/oder mindestens einem Acrylsäure- oder Methacrylsäure-Ester eines 1 bis 8 C-Atome aufweisenden Alkanols, der oben angegebenen Art aufgebaut, das mit 2 bis 6 Mol, insbesondere mit 3 bis 5 Mol, bezogen auf die Carboxylgruppen des Copolymerisats Ammoniak und 0,8 bis 1,2, insbesondere 0,9 bis 1,1 Äquivalenten pro Carboxylgruppe des Copolymerisats einer Zinkverbindung umgesetzt ist. Als Zinkverbindung kommt für die Herstellung des wasserlöslichen polymeren Zinkaminkomplexes vor allem Zinkoxid sowie ferner Zinkacetat, Zinkcarbonat und Zinkhydroxid in Frage. Für die Herstellung der wässerigen Grundierung wird der wasserlösliche polymere Zinkaminkomplex vorzugsweise als eine etwa 40%ige wässerige Lösung in einer Menge von 10 bis 25 Gew.%, bezogen auf die gesamte Grundierung eingesetzt. Die Herstellung der wässerigen Lösung des polymeren Zinkaminkomplexes kann z.B. derart erfolgen, dass man zu einer wässerigen Lösung des Polymerisats zunächst Ammoniakwasser, dessen Konzentration im allgemeinen 10 bis 27 Gew.% beträgt, in einem Molverhältnis von Ammoniak zu Carboxylgruppen von vorzugsweise 3:1 bis 6:1 gibt und dann die Zinkverbindung, insbesondere Zinkoxid, unter Rühren in die Lösung einträgt. Der Polymer-Anteil des polymeren Zinkaminkomplexes kann in an sich üblicher Weise z.B. durch Substanz- oder Lösungspolymerisation hergestellt sein.

Das erfindungsgemässe Bindemittel für wässerige Grundierungen kann zusätzlich noch übliche Filmbildehilfsmittel, wie Glykolether oder -ester, oder Benzin in Mengen bis zu 5% sowie Pigmente und/oder Füllstoffe, wie Titanweiss, Talkum und/oder Kreide bis zu einer PVK von 35% enthalten. Die Grundierungen können in üblicher Weise, zum Beispiel durch Spritzen, Walzen, Streichen, Tauchen, Giessen oder Rollen verarbeitet werden.

Die in den folgenden Beispielen angegebenen Teile und Prozente beziehen sich auf das Gewicht.

*Beispiel 1*

(a) Herstellung des polymeren Zinkaminkomplexes

In einen beheizbaren druckfesten Rührkessel legt man 55,8 Teile einer 25%igen wässerigen Ammoniaklösung vor und löst darin unter Rühren 34,4 Teile eines nach den Angaben der DE-OS 30 34 171 hergestellten Copolymerisats aus gleichen Teilen Styrol und Acrylsäure des K-Werts 12. In die Lösung trägt man unter Rühren 9,7 Teile Zinkoxid (Qualität: Rotsiegel) ein, verschliesst den Kessel und erhitzt auf 55° C. Nach Erreichen dieser Temperatur rührt man noch 3 Stunden, entspannt den Kessel und kühlt auf Raumtemperatur ab. Man erhält eine 45%ige wässerige Lösung eines polymeren Zinkaminkomplexes.

(b) Herstellung des Bindemittels

85 Teile einer handelsüblichen wässerigen Dispersion eines Copolymerisats aus 50 Teilen Styrol, 48 Teilen Isobutylacrylat und 2 Teilen Methacrylsäure, die 2,5 bis 4,5 Gew.%, bezogen auf das Copolymerisat an ethoxylierten (EO-grad: 25) p-Nonylphenol und des entsprechend sulfierten Produkts im Verhältnis 1:1 als Emulgatoren enthält, werden in einem Rührkessel vorgelegt. Man gibt dann innerhalb von 5 Minuten 2,5 Teile n-Butylglykol unter Rühren zu und fügt anschliessend innerhalb von 10 Minuten 15 Teile der gemäss (a) hergestellten wässerigen Lösung des polymeren Zinkaminkomplexes zu.

Man erhält eine 47%ige Grundierung, deren pH-Wert 10 beträgt.

*Beispiel 2*

(a) Herstellung des polymeren Zinkaminkomplexes

Man legt 28 Teile 25%ige wässerige Ammoniaklösung vor und löst darin unter Rühren 34,4 Teile eines nach der Lehre der DE-OS 30 34 171 hergestellten Copolymerisats aus 60 Teilen Methylmethacrylat, 15 Teilen Methylacrylat und 25 Teilen Acrylsäure. In diese Lösung trägt man unter Rühren 4,85 Teile Zinkoxid (Rotsiegel) ein und verfährt weiter, wie in Beispiel 1 unter (a) angegeben.

(b) Herstellung des Bindemittels

80 Teile einer 50%igen wässerigen Dispersion eines Copolymerisats aus 50 Teilen n-Butylacrylat, 47 Teilen Methacrylsäuremethylester, 1 Teil Acrylsäure und 2 Teilen Methacrylamid, die, bezogen auf das Polymerisat 4% einer 1:1-Mischung von ethoxyliertem (EO-grad: 25) p-Nonylphenol und des entsprechenden sulfierten Produkts als Emulgatoren enthält, werden vorgelegt und dazu nacheinander 2,5 Teile n-Butylglykol und 20 Teile der nach den Angaben unter (a) hergestellten polymeren Zinkaminkomplex-Lösung zugegeben. Man erhält eine Grundierung eines Feststoffgehalts von 46% und des pH-Werts 9,8.

*Beispiel 3*

(a) Herstellung des polymeren Zinkaminkomplexes

Man legt 44,75 Teile 25%ige wässerige Ammoniaklösung vor und löst darin 34,4 Teile eines nach der Lehre der DE-OS 30 34 171 hergestellten Copolymerisates aus 60 Teilen Styrol, 30 Teilen Acrylsäure und 10 Teilen Maleinsäureanhydrid vom K-Wert 15. Zu der Lösung gibt man 8,9 Teile Zinkoxid (Rotsiegel) und verfährt wie in Beispiel 1 unter (a) angegeben.

(b) Herstellung des Bindemittels

Zu 85 Teilen einer Polymerdispersion, wie in Beispiel 1 unter (b) angegeben, gibt man innerhalb von 6 Minuten 2,5 Teile n-Butylglykol und innerhalb von 15 Minuten 15 Teile der unter (a) angegebenen wässerigen Lösung des polymeren Zinkaminkomplexes. Der Feststoffgehalt der erhaltenen Grundierung beträgt 49 Gew.%, der pH-Wert 10,2.

Die erhaltenen Bindemittel werden gemäss folgendem Rezept pigmentiert:

Bindemittel, 46%ig, 114 Teile (als Vorlage für das Anteigen der Füllstoffe und Pigmente),

Natriumpolyphosphat, 10%ige wässerige Lösung, 12 Teile,

Wasser, 42 Teile,

polyacrylsaures Natrium (30%ige wässerige Lösung), 1 Teil,

Titandioxid (Rutil), 194 Teile,

Grundierung 46%ig, 115 Teile,

Kreide (5 μm), 150 Teile,

Testbenzin (Siedebereich 180 bis 210° C), 10 Teile,

Diisobutylester-Gemisch der Adipin-, Bernstein- und Glutarsäure, 5 Teile,

Verdicker (25%ige wässerige Lösung), 8 Teile,

Entschäumer (Silikonbasis), 5 Teile,

Bindemittel (46%ig), 344 Teile.

Die PVK dieser Spezialgrundierung beträgt 29%.

Prüfung der Grundierungen:

Die mit den Bindemitteln der Beispiele 1 bis 3 hergestellten Grundierungen werden in einer Menge von 120 g/m² auf Redwood, Merbau und Redcedar aufgetragen. Nach 4stündigem Trocknen werden die grundierten Hölzer mit einer wässerigen Dispersionslackfarbe (PVK 35%) in einer Menge von 120 g/m² beschichtet. Die Dispersionslackfarbe hat folgende Zusammensetzung:

wässerige 50%ige Dispersion eines Copolymerisats aus 50 Teilen Methylmethacrylat, 48 Teilen Butylacrylat und 2 Teilen Acrylsäure der MFT 14° C, 470 Teile,

Wasser, 69 Teile,

polyacrylsaures Natrium (30%ige wässerige Lösung), 1,2 Teile,

Natriumpolyphosphat (10%ige wässerige Lösung), 11,3 Teile,

Ammoniak (25%ige wässerige Lösung), 1,5 Teile,

Testbenzin (Siedebereich 180 bis 210° C), 10 Teile,

Titandioxid (Rutil), 155,7 Teile,

Kreide (5 μm), 179 Teile,

Talkum (5 μm), 61 Teile,

Celluloseether (1%ige wässerige Lösung), 119 Teile

Verdicker (Polyurethanbasis, 15%ige wässerige Lösung), 0,8 Teile,

Diisobutylestergemisch der Adipin-, Bernstein- und Glutarsäure, 10 Teile,

Entschäumer (Silikonbasis), 2,5 Teile.

Nach 24stündiger Lagerung bei Raumtemperatur werden die beschichteten Hölzer jeweils 48 Stunden in Wasser gestellt.

Zum Vergleich werden die Hölzer der genannten Art mit einer 50%igen wässerigen Dispersion eines Copolymerisats aus 50 Teilen Isobutylacrylat, 48 Teilen Styrol und 2 Teilen Methacrylsäure in einer Auftragsmenge von 120 g/m² grundiert und wie oben beschrieben mit einer Deckbeschichtung versehen. Schliesslich wurden zum weiteren Vergleich die Holzkörper allein mit der oben angegebenen Dispersionslackfarbe in einer Auftragsmenge von 120 g/m² beschichtet.

Bei der Prüfung wird die Fleckenbildung der jeweiligen Deckbeschichtung und die Verfärbung des Wassers beurteilt, in dem die beschichteten Hölzer gelagert werden. Die Ergebnisse sind in der folgenden Tabelle zusammengestellt.

*(Tabelle auf der nächsten Seite)*

## Patentanspruch

Bindemittel für wässerige Grundierungen für Holzanstriche, bestehend aus

(A) 50 bis 95% ihres Gewichts einer wässerigen gegen mehrwertige Ionen stabilen Dispersion eines Vinylpolymerisats einer Teilchengrösse von 0,03 bis 0,5 μm und einer MFT von 0 bis 50° C und

(B) 5 bis 50% ihres Gewichts eines wasserlöslichen polymeren Zinkaminkomplexes aus einem Copolymerisat des K-Werts 8 bis 40 aus

(a) 20 bis 60% seines Gewichts einer 3 bis 5 C-Atome enthaltenden α,β-monoethylenisch ungesättigten Mono- und/oder Dicarbonsäure und

(b) 40 bis 80% seines Gewichts Styrol und/oder mindestens einem (Meth)acrylsäureester eines 1 bis 8 C-Atome aufweisenden Alkanols, das mit 2 bis 6 Mol, bezogen auf die Carboxylgruppen des Copolymerisats, Ammoniak und 0,8 bis 1,2 Äquivalenten pro Carboxylgruppe des Copolymerisats einer Zinkverbindung umgesetzt ist.

## Claim

A binder for aqueous primers for wood paints, which consists of

(A) from 50 to 95% by weight, based on the weight of the primer, of an aqueous dispersion of a vinyl polymer having a particle size of from 0.03 to 0.5 μm and a minimum film-forming temperature of from 0 to 50° C, the said dispersion being stable to polyvalent ions, and

(B) from 5 to 50% by weight, based on the weight of the primer, of a water-soluble polymeric zinc amine complex of a copolymer which has a K value of from 8 to 40 and consists of

(a) from 20 to 60% by weight, based on the weight of the copolymer, of an $\alpha,\beta$-monoethylenically unsaturated mono- and/or dicarboxylic acid of 3 to 5 carbon atoms, and

(b) from 40 to 80% by weight, based on the weight of the copolymer, of styrene and/or one or more alkyl (meth)acrylates, where alkyl is of 1 to 8 carbon atoms, the copolymer being reacted with from 2 to 6 moles, based on the carboxyl groups of the copolymer, of ammonia and from 0.8 to 1.2 equivalents of a zinc compound per carboxyl group of the copolymer.

## Revendication

Liants pour couches de fond aqueuses pour peindre le bois, composés de
(A) 50 à 95% en poids d'une dispersion aqueuse, stable vis-à-vis des ions polyvalents, de particules d'une dimension de 0,03 à 0,5 µm d'un polymère vinylique avec une température de fluidification comprise entre 0 et 50° C, et
(B) 5 à 50% en poids d'un complexe zinc-amine polymère hydrosoluble dérivé d'un copolymère d'une valeur K de 8 à 40, composé de

(a) 20 à 60% de son poids d'un acide mono- et (ou) di-carboxylique en $C_3$ à $C_5$ à insaturation $\alpha,\beta$-mono-éthylénique, et

(b) 40 à 80% de son poids de styrène et (ou) d'au moins un (méth)acrylate d'un alcanol en $C_1$ à $C_8$, que l'on a fait réagir avec 2 à 6 moles par rapport aux groupes carboxyle du copolymère d'ammoniac et avec 0,8 à 1,2 équivalent d'un dérivé du zinc par groupe carboxyle du copolymère.

Tabelle

| Grundierung/Bindemittel _Deckbeschichtung_ Hölzer | Beispiel 1 | Beispiel 2 | Beispiel 3 | Butylacrylat/Styrol | — |
|---|---|---|---|---|---|
| | wässerige Dispersionslacke | wässerige Dispersionslacke | wässerige Dispersionslacke | wässerige Dispersionslacke | wässerige Dispersionslacke |
| Redwood | keine Fleckenbildung keine Verfärbung des Wassers | keine Fleckenbildung keine Verfärbung des Wassers | keine Fleckenbildung keine Verfärbung des Wassers | geringe Fleckenbildung leichte Verfärbung des Wassers | starke Fleckenbildung starke Verfärbung des Wassers |
| Merbau | keine Fleckenbildung keine Verfärbung des Wassers | keine Fleckenbildung keine Verfärbung des Wassers | keine Fleckenbildung keine Verfärbung des Wassers | starke Fleckenbildung starke Verfärbung des Wassers | sehr starke Fleckenbildung sehr starke Verfärbung des Wassers |
| Redcedar | keine Fleckenbildung keine Verfärbung des Wassers | keine Fleckenbildung keine Verfärbung des Wassers | keine Fleckenbildung keine Verfärbung des Wassers | geringe Fleckenbildung leichte Verfärbung des Wassers | starke Fleckenbildung starke Verfärbung des Wassers |